# EUROPEAN PATENT APPLICATION

(11) **EP 2 511 914 A1**
(43) Date of publication of application: **17.10.2012**
(21) Application number: 09851994.5
(22) Date of filing: 11.12.2009
(51) Int. Cl.: H01B 15/00, H02G 1/12

(54) **CABLE RECOVERY INSTALLATION**

(71) Applicant: Fernie, S.L., 45950 Casarrubios Del Monte (ES)
(72) Inventor: FERNANDEZ NIETO, Jose Luis, E-45950 Casarrubios Del Monte (ES)
(74) Representative: Capitán García, Maria Nuria
(86) International application number: PCT/ES2009/070578
(87) International publication number: WO 2011/070184

(57) **Abstract**

This invention comprises an installation to separate the sheath surrounding the core of a cable such that said core is wound onto a coil, said installation being simple and small.

## Description

### OBJECT OF THE INVENTION

The present invention lies in the field of cable recovery installations that separate the core of said cable from the sheath that surrounds it.

The disclosed invention relates to an installation to separate the sheath surrounding the core of a cable such that said core is wound onto a coil, said installation being simple and small.

### BACKGROUND OF THE INVENTION

Normally, in order to separate the components of cables with a core made of metal, such as steel, and a sheath made of metal, such as aluminium, large installations are used with large and complex mechanisms such as gear trains.

These known installations are expensive to both build and operate, due to their size and to the number of mechanical components, such as the aforementioned gears, which break the core as it is separated from the sheath.

Also known are installations in which the cable has a plastic sleeve, in which the installation must have means to cut the plastic sleeve, thereby adding another element to an installation that is already large and costly to maintain.

### DESCRIPTION OF THE INVENTION

The present invention is defined and characterised by its independent claims, while its dependent claims describe its additional characteristics.

In view of the foregoing, the present invention relates to a cable recovery installation that comprises: separating means to separate at least one core of the cable from its sheath; winding means to wind the cable core, which in turn comprise: a winding spindle around which the cable core is wound; translation means, which confer a displacement motion to the winding spindle; rotation means, which confer a rotation to the winding spindle; a base, which serves as a support for the separating and winding means, which in turn comprises: a support for the translation means; a through support, through which passes the winding spindle; a support for the rotation means, to which the rotation means are attached.

An advantage of the present invention is its small size, particularly as compared to known installations with gear trains, allowing it to be used in small and medium industry without requiring great investments in space or for acquisition and maintenance.

An additional advantage worth noting of the present invention is its simplicity, as it comprises known mechanical elements with a simple and reliable operation, as opposed to gear trains and other known installations.

### DESCRIPTION OF THE DRAWINGS

This specification is accompanied by a set of drawings illustrating the preferred embodiment of the invention and in no way meant to limit its scope.
Figure 1 represents a perspective view of the installation without the coil, the winding spindle in the position of discharge of the coil and the cover open.
Figure 2 represents an elevation view of the winding means.
Figure 3 represents a perspective view of the installation with the cover closed.
Figure 4 represents the adapter between the motor of the rotation means and the winding spindle.
Figure 5 represents a cross-section view of the separation between the sheath of the core and its winding.
Figure 6 represents a front view of the shield for the variant of a cable with three cores.

### DETAILED DESCRIPTION OF THE INVENTION

In view of the foregoing, the present invention relates to a cable recovery installation comprising: separation means (1) to separate at least one core, normally a copper wire, of a cable from its sheath, normally an aluminium wire; winding means (2) to wind the cable core, which in turn comprise: a winding spindle (2.1) about which the cable core is wound; translation means (2.2) that confer a translational motion to the winding spindle (2.1); rotation means (2.3) that confer a rotation motion to the winding spindle (2.1); a base (3) that serves as a support for the separation means (1) and winding means, which in turn comprises: a support (3.1) for the translation means; a through support (3.2) and a support (3.3) for the rotation means, to which the rotation means (2.3) are attached.

The aforementioned cable sheath must be interpreted as the sheath surrounding the core, which can be a wire, several wires, a braid of several wires, a plastic sleeve, etc.

In a preferred embodiment of the invention, the installation comprises a base (3) by way of a frame that makes up the structure on which are disposed the various components of the installation.

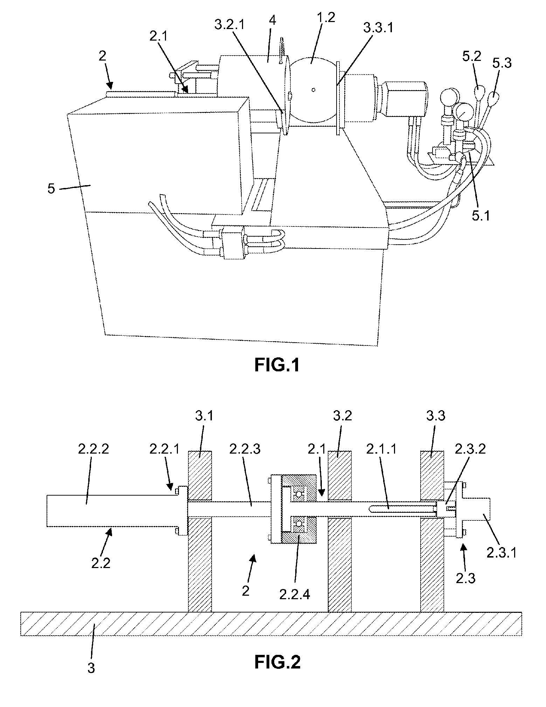

As regards these components, it is worth noting the different supports of each one, namely: the those of the translation means (2.2), the through means and the rotation means (2.3) (see figure 2).

The bottle (2.2.2) of the hydraulic cylinder (2.2.1) that forms part of the translation means (2.2) is attached to the support (3.1) for said translation means.

The through support (3.2) includes a plate (3.2.1) joined to it, both of which are crossed by a central through orifice in which moves the winding spindle (2.1) of the translation means (2.2).

Attached to one side of the support of the rotation means (3.3) is a plate (3.3.1) similar to that described for the through support (3.2), and attached to the other side is a coupling (2.3.2) that connects with the motor (2.3.1) of the rotation means (2.3).

The aforementioned plates (3.2.1) and (3.2.2) joined to the supports are placed opposite each other in this example of embodiment, and comprise a central through orifice inside which moves the winding spindle (2.1) in its translation movements, as will be explained further below.

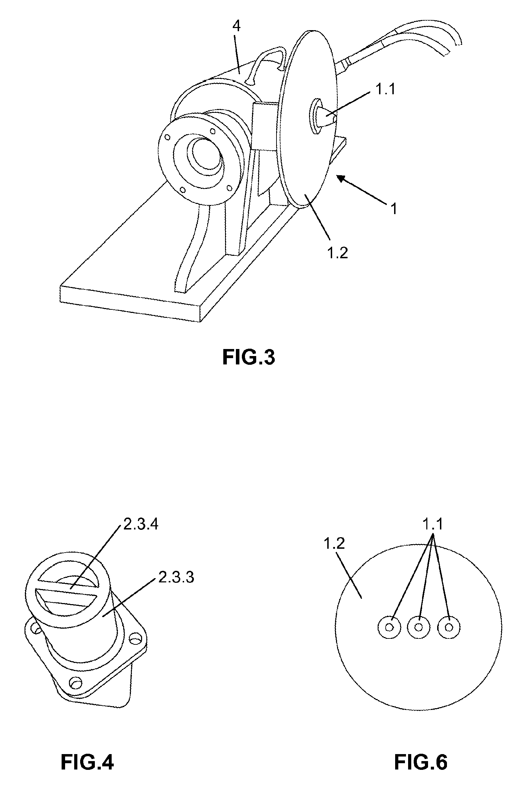

The separation means (1) are a separation plate or shield (1.2), attached to the centre of which is a conical element (1.1). Both the shield (1.2) and the conical element (1.1) have a central through orifice, as shown in figure 3.

Said conical element (1.1) is an exchangeable guide, striated or smooth, which in this example has a conical shape but may have any other shape provided it allows the cable sheath to slide, and is adaptable to any cable diameter.

The cable can consist of several cores and sheaths, so that the shield (1.2) will be fitted with as many conical elements as there are cores, providing the corresponding coils. Figure 6 shows three conical elements for three cores.

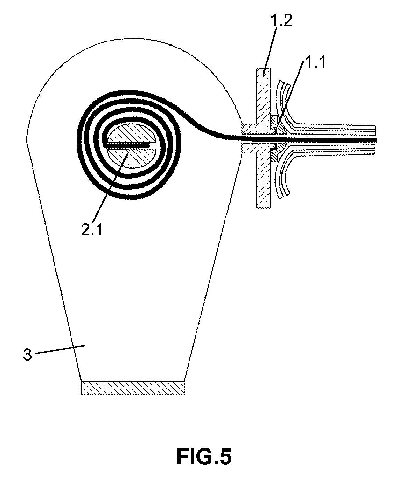

The cable core is made to pass through the orifice that crosses the shield (1.2) and the conical element (1.1) so that the sheath of the cable slides against the wall of the conical element (1.1) and meets the shield (1.2), where, if it is an aluminium wire for example, it is compressed, separating the core and sheath of the cable as shown in figure 5.

The winding means (2) in this example of embodiment consist of a hydraulic cylinder (2.2.1) of a known type, mainly consisting of a bottle (2.2.2) and a stem (2.2.3); to the end of said stem (2.2.3) is attached a winding spindle (2.1) with a groove (2.1.1) on the end opposite the end where it is joined to the stem (2.2.3). The cylinder (2.2.1), the winding spindle (2.1) and the connector (2.2.4) between them make up the translation means (2.2).

The connector (2.2.4) is a bushing that houses the end of the stem (2.2.3) of the cylinder (2.2.1), in a manner allowing it to rotate inside said bushing, which is joined to the winding spindle (2.1), see figure 2. As is known in the state of the art to minimise the friction between to elements that revolve about each other, in this example of embodiment a single-row ball bearing has been used.

The winding means (2) also include a hydraulic motor (2.3.1) that turns the winding spindle (2.1) and which, together with the coupling (2.3.2) and an adaptor (2.3.3), make up the rotation means (2.3).

The adaptor (2.3.3), shown in figure 4, is a cylindrically-shaped part which is connected on one end to the shaft of the motor (2.3.1) and on the other has a diametrical key (2.3.4) that engages a portion of the groove (2.1.1) on the end of the winding spindle (2.1).

To wind the core of the cable after it has passed the shield (1.2), the free end of the core engages the groove (2.1.1) of the winding spindle (2.1), which as it turns and due to the traction force to which it is subjected blocks said end, allowing it to wind and form a coil, as shown in figure 5.

Once the desired amount of cable has been wound, to release the coil from the installation a translation movement is applied to the winding spindle (2.1) so that its end connected to the adaptor (2.3.3) of the motor (2.3.1) moves back until the coil is released from the spindle and falls due to gravity. To start again the cable recovery process, and therefore the core winding process, the winding spindle (2.1) advances until the groove (2.1.1) on its end re-engages the adaptor (2.3.3) of the motor (2.3.1).

In addition, in order to protect the operator in the winding area, the installation is provided with a cover (4) that covers the winding area, which moves in a sliding manner so that closing the cover (4) implies covering the winding area.

The cover (4) can remain covering the winding area even when the winding spindle (2.1) is removed to allow the coil to fall. It is only necessary to remove the cover (4) when loading a new coil.

An alternative to the groove (2.1.1) of the winding spindle (2.1) is for this spindle to have a through orifice, not shown, through which the end of the core is made to pass.

The installation of this preferred embodiment comprises a hydraulic group (5) meant to supply pressure to the motor (2.3.1) and the cylinder (2.2.1), passing through a double distribution manifold (5.1).

This double distribution manifold (5.1), actuated by corresponding levers (5.2) and (5.3), also actuates the motor (2.3.1) or the cylinder (2.2.1).

When a cable core is engaged in the groove (2.1.1) of the winding spindle (2.1), the lever (5.2) is actuated so that the motor (2.3.1) turns and winds to create the coil.

Once the coil is completed, the lever (5.3) is actuated to move the cylinder (2.2.1), moving the winding spindle (2.1) away from the motor (2.3.1) and thereby releasing the finished coil.

## Claims

1. Cable recovery installation comprising:
- separation means (1) to separate at least one core of the cable from its sheath;
- winding means (2) to wind the cable core, which in turn comprise:
- a winding spindle (2.1) about which the cable core is wound;
- translation means (2.2) that transmit a translational motion to the winding spindle (2.1);
- rotation means (2.3) that transmit a rotational motion to the winding spindle (2.1);
- base (3) used to support the separation means (1) and winding means, which in turn comprises:
- a support for the translation means (3.1);
- a through support (3.2) through which passes the winding spindle (2.1);
- a support for the rotation means (3.3) to which the rotation means (2.3) are attached.

2. Cable recovery installation according to claim 1, **characterised in that** the through support (3.2) and the support for the rotation means (3.3) include the corresponding plates (3.2.1) and (3.2.2) attached to them, which define between them the winding space for the cable core.

3. Cable recovery installation according to claim 1, **characterised in that** the separation means (1) essentially consist of a conical element (1.1) joined to a separation plate (1.2), which is in turn joined to the plates (3.2.1) and (3.2.2) attached to the through supports and the translation means (2.2).

4. Cable recovery installation according to claim 1, **characterised in that** the translation means (2.2) essentially consist of a hydraulic or pneumatic cylinder (2.2.1) and a connector (2.2.4) between the cylinder (2.2.1) and the winding spindle (2.1).

5. Cable recovery installation according to claim 4, **characterised in that** the connector (2.2.4) essentially consists of a bushing that houses the end of the stem (2.2.3) of the cylinder (2.2.1) so that it allows the rotation of said stem (2.2.3) and the winding spindle (2.1).

6. Cable recovery installation according to claim 1, **characterised in that** rotation means (2.3) essentially consist of a hydraulic or pneumatic motor (2.3.1) and a coupling (2.3.2) between said motor (2.3.1) and the support of the rotation means (3.3).

7. Cable recovery installation according to claim 5, **characterised in that** the motor (2.3.1) of the rotation means (2.3) transmits a motion to the winding spindle (2.1) through a cylindrical adaptor (2.3.3) with a diametrical key (2.3.4) at one of its ends, such that said key (2.3.4) engages the groove (2.1.1) of the winding spindle (2.1).

8. Cable recovery installation according to claim 1, **characterised in that** the base (3) includes a cover for covering the winding area of the cable core defined between the plates (3.2.1) and (3.2.2) attached to the through supports and the translation means (2.2).

9. Cable recovery installation according to claim 3, **characterised in that** the conical element (1.1) has a conical profile and a smooth surface in contact with the cable sheath.

10. Cable recovery installation according to claim 1, **characterised in that** the winding spindle has a groove (2.1.1) or a through orifice meant to engage the free end of the cable core to be wound.

11. Cable recovery installation according to claim 1, **characterised in that** it essentially comprises a hydraulic group (5) with a double distribution manifold (5.1), a lever (5.2) to actuate the motor (2.3.1) and another lever (5.3) to actuate the cylinder (2.2.1).
